(19) Europäisches Patentamt
European Patent Office
Office européen des brevets

(11) EP 3 719 868 A1

(12) # EUROPEAN PATENT APPLICATION
published in accordance with Art. 153(4) EPC

(43) Date of publication:
**07.10.2020 Bulletin 2020/41**

(21) Application number: **18884610.9**

(22) Date of filing: **20.11.2018**

(51) Int Cl.:
***H01M 2/16*** *(2006.01)* ***B32B 5/24*** *(2006.01)*

(86) International application number:
**PCT/JP2018/042830**

(87) International publication number:
**WO 2019/107219 (06.06.2019 Gazette 2019/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.11.2017 JP 2017227528**

(71) Applicant: **Toray Industries, Inc.**
**Tokyo 103-8666 (JP)**

(72) Inventors:
- **KAI Nobuyasu**
  **Otsu-shi**
  **Shiga 520-8558 (JP)**
- **IKOMA Kei**
  **Nasushiobara-shi**
  **Tochigi 329-2763 (JP)**
- **TSUKUDA Akimitsu**
  **Otsu-shi**
  **Shiga 520-8558 (JP)**

(74) Representative: **Mewburn Ellis LLP**
**Aurora Building**
**Counterslip**
**Bristol BS1 6BX (GB)**

(54) **POROUS FILM, SEPARATOR FOR SECONDARY CELL, AND SECONDARY CELL**

(57) The purpose of the present invention is to provide a porous film having a high heat rupture resistance, a high adhesiveness with respect to an electrode, and excellent cell characteristics. A porous film having a porous layer on at least one surface of a porous substrate. The porous layer has a first porous layer having a resin A, and has, on the first porous layer, a second porous layer containing a resin B. The mixed layer thickness (HC) of the first porous layer and the second porous layer is 0.1 to 1.0 μm inclusive. Resin A: a resin having a melting point of 150 °C or higher, or a resin that does not essentially have a melting point. Resin B: a resin having a melting point below 150°C, or an amorphous resin.

EP 3 719 868 A1

## Description

Technical Field

The present invention relates to a porous film, a secondary battery separator, and a secondary battery.

Background Art

A secondary battery such as a lithium ion battery has been widely used for portable digital equipment such as a smart phone, a tablet, a mobile phone, a notebook computer, a digital camera, a digital video camera, and a handheld game console, portable equipment such as an electric tool, an electric motorcycle, and an electric assist bicycle, and an automobile such as an electric automobile, a hybrid vehicle, and a plug-in hybrid vehicle.

Typically, the lithium ion battery has a structure in which a secondary battery separator and electrolytes are interposed between a positive electrode formed by laminating a positive electrode active material on a positive electrode current collector, and a negative electrode formed by laminating a negative electrode active material on a negative electrode current collector.

As the secondary battery separator, a polyolefin-based porous substrate has been used. Examples of characteristics required for the secondary battery separator include: a characteristic that the secondary battery separator contains an electrolytic solution in a porous structure such that movement of ions is enabled; and a shutdown characteristic that when a lithium ion battery generates heat abnormally, the porous structure is closed by melting due to the heat and the movement of ions is stopped, thereby stopping power generation.

However, the secondary battery separator has been required to have not only the above characteristics but also higher heat resistance along with higher capacity and a higher output of the lithium ion battery in recent years. In the case where the lithium ion battery generates heat abnormally and the battery is further heated after the above shutdown characteristic is activated, film rupture of the secondary battery separator occurs. In addition, when shock is applied to the lithium ion battery, the secondary battery separator generates heat under pressure locally applied, and then, film rupture of the secondary battery separator may occur. When such film rupture of the secondary battery separator occurs, short circuit may occur inside the battery, and the ignition and explosion of the battery may be caused. Accordingly, the secondary battery separator is required to have heat rupture resistance at high temperature in addition to the shutdown characteristic.

On the one hand, in a step for producing a secondary battery, adhesiveness between a separator before impregnation with an electrolytic solution and an electrode is required in order to: maintain a laminated body which is obtained by laminating a positive electrode, a separator, and a negative electrode, when the laminated body is transported; prevent deformation of a shape of a laminated body of a wound positive electrode, separator, and negative electrode when the laminated body is inserted into a can such as a cylindrical can and a square can after being pressed; increase energy density by placing more laminated bodies in a can by pressing the laminated body; and further in the case of a laminated battery, prevent deformation of a shape of a laminated body after the laminated body is inserted into an exterior material.

On the other hand, the lithium ion battery is also required to have excellent battery characteristics such as high output and long life, such that battery characteristics do not deteriorate in imparting the heat resistance to the secondary battery separator, and the lithium ion battery is required to exhibit good battery characteristics.

For these requests, Patent Literature 1 describes that a heat shrinkage ratio is reduced by laminating a porous layer containing inorganic particles on a porous film mainly containing a polyolefin. Patent Literature 2 describes that heat resistance is improved by laminating a heat resistant layer containing heat resistant resins. Patent Literature 3 describes that heat resistance is improved by laminating heat resistant resins, and adhesiveness with an electrode after an electrolytic solution is injected is improved by laminating fluorine-based resins.

Citation List

Patent Literature

Patent Literature 1: Japanese Patent No. 5183435
Patent Literature 2: Japanese Patent No. 5286817
Patent Literature 3: JP2013-20769 A

Summary of Invention

Technical Problem

However, although the heat shrinkage ratio is reduced by the inorganic particles in Patent Literature 1, when the temperature reaches a high-temperature range after shutdown, thermal film rupture of both the porous layer containing inorganic particles and a polyolefin as a substrate is likely to occur, and sufficient heat resistance cannot be ensured. In addition, the battery separator described in Patent Literature 1 does not have adhesiveness with the electrode, and thus improvement of efficiency in the step of producing a secondary battery and increase of energy density cannot be achieved. In Patent Literatures 2 and 3, although heat resistant resins are laminated, heat rupture resistance is low due to high porosity of the surface. In the case where a proportion of the heat resistant resins is increased to improve the heat rupture resistance, the deterioration of the battery characteristics is large and the cost also increases. In addition, the separators described in Patent Literatures 2 and 3 do not have adhesiveness with the electrode, and thus improvement of efficiency in the step of producing a secondary battery and increase of energy density cannot be achieved. The adhesiveness of the adhesive porous layer described in Patent Literature 3 is the adhesiveness with the electrode after injection of the electrolytic solution and is different from the adhesiveness with the electrode before the injection of the electrolytic solution, which is an object of the present invention.

In view of the above problems, an object of the present invention is to provide a porous film and a secondary battery separator at low cost, which have high heat rupture resistance and adhesiveness with an electrode, and excellent battery characteristics. Further, another object of the present invention is to provide a secondary battery with high heat resistance, high productivity, high capacity, high output, long life and low cost.

Solution to Problem

The present inventors have diligently made a study to provide a porous film at low cost, the porous film having high heat rupture resistance, adhesiveness with an electrode, and excellent battery characteristics. As a result, by preparing a porous film including a porous substrate and a porous layer provided on at least one surface of the porous substrate, in which the porous layer includes a first porous layer containing a resin A (resin A: a resin having a melting point of 150°C or higher, or a resin having no substantial melting point), and a second porous layer containing a resin B (resin B: a resin having a melting point of lower than 150°C or an amorphous resin) on the first porous layer, and a mixed-layer thickness (HC) of the first porous layer and the second porous layer is 0.1 μm or more and 1.0 μm or less, the porous film which has high heat rupture resistance, adhesiveness with an electrode, and excellent battery characteristics can be provided at low cost.

A porous film in the present invention includes following configurations in order to solve the above problem.

(1) A porous film including:

a porous substrate; and
a porous layer provided on at least one surface of the porous substrate,
in which the porous layer includes a first porous layer containing the following resin A, and a second porous layer containing the following resin B on the first porous layer, and a mixed-layer thickness (HC) of the first porous layer and the second porous layer is 0.1 μm or more and 1.0 μm or less:

resin A: a resin having a melting point of 150°C or higher, or a resin having no substantial melting point; and
resin B: a resin having a melting point of lower than 150°C, or an amorphous resin.

(2) The porous film according to (1), in which a thickness of the first porous layer is 0.5 μm or more and 10 μm or less.
(3) The porous film according to (1) or (2), in which a thickness of the second porous layer is 0.02 μm or more and 5 μm or less.
(4) The porous film according to any one of (1) to (3), in which the resin A is at least one kind of resin selected from the group consisting of polyamides, polyamide-imides, and polyimides.
(5) The porous film according to (4), in which the resin A contains an aromatic polyamide including a structure represented by the following formula (1):

$$-NH-Ar^1-NH-CO-Ar^2-CO- \quad (1)$$

in which $Ar^1$ and $Ar^2$ each represent an aromatic group.
(6) The porous film according to (5), in which an intrinsic viscosity (η) of the aromatic polyamide is 3.0 dl/g or more

and 8.0 dl/g or less.

(7) The porous film according to any one of (1) to (6), in which the resin B is any one of fluororesins, acrylic resins, and olefin resins.

(8) The porous film according to any one of (1) to (7), in which the first porous layer contains an inorganic particle having an average particle diameter of 0.05 μm or more and 5 μm or less.

(9) A secondary battery separator including the porous film according to any one of (1) to (8).

(10) A secondary battery including the secondary battery separator according to (9).

Advantageous Effects of Invention

In the present invention, by preparing a porous film including a porous substrate and a porous layer provided on at least one surface of the porous substrate, the porous layer including a first porous layer containing a resin A (resin A: a resin having a melting point of 150°C or higher, or a resin having no substantial melting point), and a second porous layer, containing a resin B (resin B: a resin having a melting point of lower than 150°C or an amorphous resin), on the first porous layer, and a mixed-layer thickness (HC) of the first porous layer and the second porous layer being 0.1 μm or more and 1.0 μm or less, the porous film which has high heat rupture resistance, adhesiveness with an electrode, and excellent battery characteristics and a secondary battery separator can be provided at low cost. By using the porous film or the secondary battery separator in the present invention, it is possible to provide a secondary battery with high heat resistance, high productivity, high capacity, high output, long life and low cost.

Brief Description of Drawings

[FIG. 1] FIG. 1 is a cross-sectional diagram showing an example of a porous film in the present invention.

[FIG. 2] FIG. 2 is a conceptual diagram showing a mixed-layer thickness (HC) in the example of the porous film in the present invention.

Description of Embodiments

A porous film in the present invention includes a porous substrate and a porous layer provided on at least one surface of the porous substrate, and the porous layer includes a first porous layer containing a resin A (resin A: a resin having a melting point of 150°C or higher, or a resin having no substantial melting point), and a second porous layer, containing a resin B (resin B: a resin having a melting point of lower than 150°C or an amorphous resin), on the first porous layer. A mixed-layer thickness (HC) of the first porous layer and the second porous layer is 0.1 μm or more and 1.0 μm or less. The present invention is described in detail below.

[First porous layer]

(Resin A)

The first porous layer in the present invention contains the resin A. The term "resin A" in the present invention means a resin having a melting point of 150°C or higher, or a resin having no substantial melting point. Here, for example, in Differential Scanning Calorimetry (DSC) according to the regulation of "JIS K7121: 2012 Method for measuring transition temperature of plastic", after the temperature is raised and lowered once, a peak top of an endothermic peak in a second temperature rise is defined as the melting point. The resin having a melting point of 150°C or higher means a resin having the above peak top in the temperature region of 150°C or higher. The resin having no substantial melting point refers to a resin that does not have the peak top in a measurement temperature range of -20°C to 300°C, and satisfies the following item (a) or (b). (a) Glass transition temperature is 150°C or higher. (b) Baseline shift in differential scanning calorimetry (DSC) is not observed.

In addition, the method for measuring the melting point is not particularly limited. First, a porous layer is separated from a porous substrate in the porous film by using a solvent which is good for the porous layer and does not dissolve the porous substrate, for example, N-methyl-2-pyrrolidone. Then, for example, solid matter such as inorganic particles is removed from the obtained solution by a common method such as a centrifugation method, a sedimentation method, or a filtration method, and the remaining resins are separated by a using a common separation method such as liquid chromatography, gas chromatography, thin layer chromatography, a distillation method, a recrystallization method, or a precipitation method. Melting points of the obtained resin components can be measured by a differential scanning calorimeter.

The above resin A preferably includes resins such as polyamides, polyamide-imides, polyimides, polyetherimides, polyvinylidene fluorides, vinylidene fluoride-hexafluoropropylene copolymers, polytetrafluoroethylenes, polysulfones, polyketones, polyetherketones, polycarbonates, and polyacetals, from the viewpoint of improving heat rupture resistance. Particularly, among them, the resin A is preferably at least one kind of resin selected from the group consisting of polyamides, polyamide-imides, and polyimides. The resin A is more preferably aromatic polyamides, aromatic polyamide-imides, or aromatic polyimides, and is still more preferably aromatic polyamides.

Examples of aromatic polyamides include meta-oriented aromatic polyamides and para-oriented aromatic polyamides. In the present invention, either of meta-oriented aromatic polyamides or para-oriented aromatic polyamides may be used. From the viewpoint of the excellent strength and heat rupture resistance of the porous layer, para-oriented aromatic polyamides are preferred.

Here, para-oriented aromatic polyamides are obtained by polymerization of para-oriented aromatic diamines and para-oriented aromatic dicarboxylic halides, and contain repeating units represented by the chemical formula (1) and/or chemical formula (2) as a basic skeleton.

Examples of $Ar^1$, $Ar^2$ and $Ar^3$ include a group represented by the following chemical formulas (3) to (7). In addition, each of X and Y in the chemical formulas (6) and (7) may be selected from -O-, -CO-, $-SO_2-$, $-CH_2-$, -S-, $-C(CH_3)_2$, and the like, and are not limited to these.

[Chem. 1]

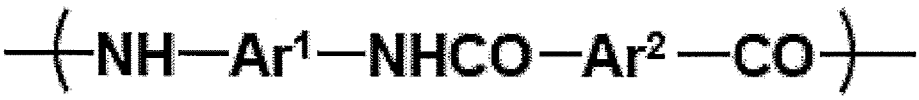 (1)

[Chem. 2]

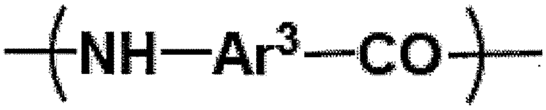 (2)

[Chem. 3]

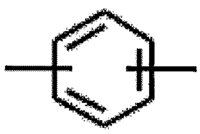 (3), 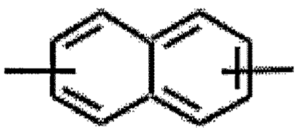 (4), 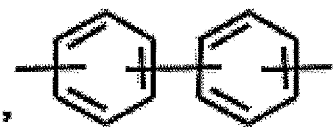 (5),

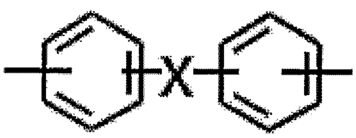 (6), 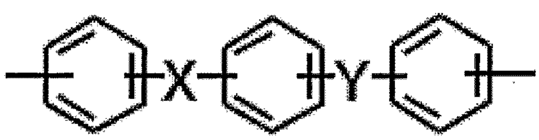 (7)

Specific examples of aromatic diamines include paraphenylenediamine, 4,4'-diaminodiphenyl ether, 3,4'-diaminodiphenyl ether, 4,4'-diaminobenzophenone, 3,3'-diaminobenzophenone, 2-chloro-1,4-phenylenediamine, 1,5'-naphthalenediamine, 4,4'-diaminodiphenyl sulfone, and the like, and aromatic diamines are not limited to these examples.

Specific examples of aromatic dicarboxylic halides include terephthalic acid chloride, 2-chloroterephthalic acid chloride, isophthalic acid chloride, 2-chloroisophthalic acid chloride, 2,6'-naphthalenedicarboxylic acid chloride, and the like, and the aromatic dicarboxylic halides are not limited to these examples.

The resin A in the present invention preferably contains an aromatic polyamide having a structure represented by the following formula (1).

$$-NH-Ar^1-NH-CO-Ar^2-CO- \quad (1)$$

Here, $Ar^1$ and $Ar^2$ each represent an aromatic group.

In the aromatic polyamide described above, 5 mol% or more and 80 mol% or less of $Ar^1$ represented by the chemical formula (1) is preferably an aromatic group having ether groups. More preferred molar ratio thereof is 7 mol% or more and 60 mol% or less, and still more preferred molar ratio thereof is 10 mol% or more and 40 mol% or less. In the case where the amount of the aromatic group having ether groups is less than 5 mol%, a sufficient porous structure may not be obtained, and battery characteristics may deteriorate. In the case where the amount of the aromatic group is more than 80 mol%, sufficient heat rupture resistance may not be obtained. In addition, the strength of the porous layer may decrease, and sufficient heat resistance may not be obtained. Furthermore, elimination or deformation of the porous layer may occur in the production step.

A content of aromatic groups having ether groups in $Ar^1$ can be calculated as follows. First, 100 parts by mass of porous film samples prepared by laminating a porous layer on a porous substrate, are fixed to a metal frame and are immersed for 24 hours at room temperature in 100 parts by mass of concentrated sulfuric acid, thereby recovering the porous layers from the samples. Then, insoluble contents (e.g., inorganic particles) are removed with a centrifugal separator or the like, and the recovered resin components are subjected to a combination of chemical methods (molecular weight analysis, mass spectrometry, nuclear magnetic resonance, Fourier transform infrared spectroscopy, etc.) so as to calculate the content of aromatic groups having ether groups.

In the aromatic polyamide described above, at least a part of the aromatic group of $Ar^1$ and $Ar^2$ in the chemical formula (1) is preferably substituted with an electron-withdrawing group, 30 mol% to 100 mol% of the total amount of all the aromatic groups are more preferably aromatic groups having substituted electron-withdrawing group(s), and 50 mol% to 100 mol% thereof are still more preferably aromatic groups having substituted electron-withdrawing group(s). Here, the electron-withdrawing group in the present invention refers to a group having electronegativity of 2.5 or more. Examples of the electron-withdrawing group include halogen groups such as a fluoro group, a chloro group, and a bromo group, halogenated alkyl groups such as a trifluoromethyl group, nitro groups, cyano groups, cyanate groups, phenyl groups, and the like.

The intrinsic viscosity ($\eta$) of the aromatic polyamide is preferably 3.0 dl/g or more and 8.0 dl/g or less, more preferably 3.3 dl/g or more and 7.0 dl/g or less, still more preferably 3.6 dl/g or more and 6.0 dl/g or less, and the most preferably 4.0 dl/g or more and 5.5 dl/g or less. By increasing the intrinsic viscosity, the degree of polymerization, that is, molecular weight of the aromatic polyamide is increased, thereby improving the heat resistance of the aromatic polyamide. Therefore, a secondary battery separator using an aromatic polyamide having high intrinsic viscosity can provide sufficient heat rupture resistance. However, in the case where the intrinsic viscosity is too high, the handleability during polymerization may decrease, and the productivity may decrease. Therefore, in the case where the intrinsic viscosity ($\eta$) is 3.0 dl/g or more, sufficient heat rupture resistance can be obtained. Alternatively, in the case where the content of the aromatic polyamide is increased in order to improve the heat rupture resistance, the air permeability is increased, and the porosity is decreased. Accordingly, the battery characteristics may deteriorate. In the case where the intrinsic viscosity ($\eta$) is 8.0 dl/g or less, the handleability during polymerization and the productivity are excellent. In addition, the aromatic polyamide can be sufficiently solved in a solvent, and aggregation of the aromatic polyamide molecules can be prevented, and a porous film can be easily formed.

(Inorganic particles)

The first porous layer in the present invention preferably contains inorganic particles. In the case where the first porous layer contains inorganic particles, thermal dimensional stability and prevention of short circuit due to foreign matters can be imparted.

Specific examples of the inorganic particles include inorganic oxide particles such as aluminum oxide, boehmite, silica, titanium oxide, zirconium oxide, iron oxide, and magnesium oxide, inorganic nitride particles such as aluminum nitride and silicon nitride, and poorly soluble ionic crystal particles such as calcium fluoride, barium fluoride, and barium sulfate. One kind of these particles may be used, or two or more kinds thereof may be mixed and used.

The average particle diameter of the inorganic particles to be used is preferably 0.05 $\mu$m or more and 5 $\mu$m or less. The average particle diameter thereof is more preferably 0.10 $\mu$m or more and 3 $\mu$m or less, and still more preferably 0.20 $\mu$m or more and 1 $\mu$m or less. In the case where the average particle diameter is 0.05 $\mu$m or more, the porous layer does not become too dense, and the air permeability may decrease. In addition, since the pore diameter is increased, the impregnation property of the electrolytic solution is improved, and the productivity is excellent. In the case where the average particle diameter is 5 $\mu$m or less, sufficient dimensional stability can be obtained, and further, the thickness of the first porous layer can be reduced, and the battery characteristics can be improved.

Examples of the shape of the particles to be used include a spherical shape, a plate shape, a needle shape, a rod shape, and an oval shape, and any shape may be used. Among them, the spherical shape is preferred from the viewpoint of a surface modification property, dispersibility, and coatability.

[Second porous layer]

(Resin B)

The second porous layer in the present invention contains the resin B. The term "resin B" in the present invention means a resin having a melting point of lower than 150°C, or an amorphous resin. The resin having a melting point of lower than 150°C is preferably a resin having a melting point of lower than 140°C, and more preferably a resin having a melting point of lower than 130°C. The term "amorphous resin" as described here refers to a resin that does not have a melting point in a temperature range of -20°C to 300°C, that is, does not have an endothermic peak in the range, and has a glass transition temperature of lower than 150°C, in a measurement by a differential scanning calorimetry analyzer. Here, for example, the glass transition temperature is measured by differential scanning calorimetry (DSC) according to the regulation of "JIS K7121: 2012 Method for measuring transition temperature of plastic", in which an intersection point of a straight line obtained by extending a baseline on a low temperature side, in the second temperature rise after temperature is raised and lowered once, to the high temperature side, and a tangent drawn at a point where a slope of a curve at a stepwise change part of glass transition is maximized, is determined as the glass transition temperature.

The resin B is preferably a resin having a melting point of lower than 150°C or an amorphous resin because high adhesiveness with an electrode is obtained. In the step of adhering the electrode to the porous film, only a hot pressing step or a pressing step is often used, and in this case, the resin B is preferably a resin having a melting point of lower than 150°C or an amorphous resin because a part of the porous layer enters a gap between the active materials of the electrode by heat or press, and the anchor effect is exhibited to enable adhesion to the electrode. In the case where the resin B is a resin having a melting point of 150°C or higher, sufficient adhesiveness with an electrode may not be obtained. The "melting point" and the "method for measuring the melting point" of the resin B are as described in the items of the resin A.

Examples of the resin B constituting the second porous layer in the present invention include fluororesins, acrylic resins, olefin resins such as polyethylenes and polypropylenes, styrene-butadiene resins, crosslinked polystyrenes, methyl methacrylate-styrene copolymers, polyimides, melamine resins, phenolic resins, polyacrylonitrile, silicon resins, urethane resins, polycarbonates, carboxymethyl cellulose resins, and the like, and one kind of these resins may be used alone, or a plurality thereof may be used in combination. Among them, fluororesins, acrylic resins, or olefin resins are preferably used, and fluororesins are more preferred, from the viewpoint of electrical stability and oxidation resistance.

Examples of the fluororesins include homopolymers such as polyvinylidene fluoride, polytetrafluoroethylene, polyvinyl fluoride, and polychlorotrifluoroethylene, and copolymers such as an ethylene-tetrafluoroethylene polymer and an ethylene-chlorotrifluoroethylene polymer. In addition, examples thereof include copolymers of homopolymers and tetrafluoroethylene, hexafluoropropylene, trifluoroethylene, and the like. Among these fluororesins, polyvinylidene fluoride resins, particularly, resins made of copolymers of vinylidene fluoride and hexafluoropropylene are preferably used from the viewpoint of electrical stability and oxidation resistance.

The weight average molecular weight of the fluororesins is preferably 50,000 or more and 2,000,000 or less. The weight average molecular weight is more preferably 100,000 or more and 1,500,000 or less. The weight average molecular weight is still more preferably 200,000 or more and 1,000,000 or less. In the case where the weight average molecular weight is less than 50,000, sufficient adhesiveness with an electrode may not be obtained. In addition, in the case where the weight average molecular weight is more than 2,000,000, handling properties and coatability may decrease due to an increase in viscosity.

Examples of the acrylic resins include poly(meth)acrylic acid and poly(meth)acrylic acid ester. Examples of a monomer of poly(meth)acrylic acid include acrylic acid and methacrylic acid, and examples of a monomer of poly(meth)acrylic acid ester include: acrylic esters such as methyl acrylate, ethyl acrylate, n-propyl acrylate, isopropyl acrylate, n-butyl acrylate, isobutyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, stearyl acrylate, cyclohexyl acrylate, isobornyl acrylate, dicyclopentanyl acrylate, and dicyclopentenyl acrylate; methacrylate such as methyl methacrylate, ethyl methacrylate, n-propyl methacrylate, isopropyl methacrylate, n-butyl methacrylate, t-butyl methacrylate, isobutyl methacrylate, t-butyl methacrylate, t-butylcyclohexyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, stearyl methacrylate, cyclohexyl methacrylate, hydroxyethyl methacrylate, benzyl methacrylate, isobornyl methacrylate, dicyclopentanyl methacrylate, and dicyclopentenyl methacrylate; and the like. One kind of these compounds may be used alone, or two or more kinds thereof may be used in combination.

In addition, similar to the first porous layer, the second porous layer may contain inorganic particles.

(Formation of porous layer)

The porous film according to the embodiment of the present invention is obtained by a method for producing, for example, the porous film which includes the porous substrate and the porous layer provided on at least one surface of the porous substrate, the porous layer including the first porous layer containing the resin A (resin A: a resin having a melting point of 150°C or higher, or a resin having no substantial melting point), and a second porous layer, containing a resin B (resin B: a resin having a melting point of lower than 150°C or an amorphous resin), on the first porous layer, and a mixed-layer thickness (HC) of the first porous layer and the second porous layer being 0.1 $\mu$m or more and 1.0 $\mu$m or less. The method is described below.

In order to laminate the first porous layer, in the case where aromatic polyamides are used as the resin A, the aromatic polyamides, which are manufactured by a common production method such as solution polymerization of a diamine with an acid dichloride such as 2-chloroterephthaloyl chloride used as raw materials, and inorganic particles are dispersed in a solvent, thereby preparing a coating liquid. Here, as the solvent allowing them to disperse, an aprotic organic polar solvent such as N-methyl-2-pyrrolidone, N,N-dimethylacetamide, dimethylformamide, and dimethyl sulfoxide may be used. Among them, N-methyl-2-pyrrolidone is particularly preferred from the viewpoint of formation of a porous structure in the later step.

In addition, a poor solvent for an aromatic polyamide may be added to facilitate the porosification. The poor solvent is not particularly limited as long as it is a liquid that hardly causes solvation with the aromatic polyamide, and specific examples thereof include water, alcohol-based solvents, and mixed solvents thereof. Among them, water is preferably added, and the amount of water to be added is preferably 500 parts by mass or less with respect to 100 parts by mass of aromatic polyamides. In the case where the amount of water added is greater than 500 parts by mass, aromatic polyamides may be solidified in the coating liquid, and the stability of the coating agent may not be sufficiently obtained.

In addition, dispersants, thickeners, stabilizers, defoamers, and leveling agents may be added to the coating liquid as necessary.

As a method for dispersing the coating liquid, a common method may be used. The coating liquid is dispersed by, for example, a ball mill, a bead mill, a sand mill, a roll mill, a homogenizer, an ultrasonic homogenizer, a high pressure homogenizer, an ultrasonic device, paint shaker, and the like. The plurality of mixing and dispersing machines may be combined to perform dispersion stepwise.

The order of preparing the coating liquid is not particularly limited. From the viewpoint of efficiency of a dispersion step, it is preferable to prepare a coating liquid by mixing aromatic polyamides with an aprotic organic polar solvent and allowing the aromatic polyamides to dissolve therein, and adding inorganic particles and other additives to the solution.

Next, the obtained coating liquid is applied to the porous substrate, followed by being immersed in a water tank and subjected to drying, and the first porous layer is laminated. As a coating method, coating may be performed by common methods. It is possible to utilize, for example, dip coating, gravure coating, slit die coating, knife coating, comma coating, kiss coating, roll coating, bar coating, spray painting, dip coating, spin coating, screen printing, ink jetting printing, pat printing, other kinds of printing, and the like. The coating method is not limited to these, and a coating method may be selected depending on preferred conditions for the resin A, the resin B, inorganic particles, binders, dispersants, leveling agents to be used, a solvent, a substrate to be used, and the like. In order to improve coatability, for example, a surface treatment for a surface to be coated, such as a corona treatment or a plasma treatment, may be performed on the porous substrate.

The content of the resin A in the first porous layer is preferably 1 mass% or more and less than 50 mass%, and more preferably 3 mass% or more and less than 30 mass%, based on 100 mass% of the entire first porous layer. The content of the resin A is still more preferably equal to or more than 5 mass% and less than 20 mass%.

In the case where the content of the resin A in the first porous layer is 1 mass% or more, sufficient heat rupture resistance may be obtained. In the case where the content of the resin A in the first porous layer is less than 50 mass%, the content of the resin A is not too large, a sufficient porous structure can be obtained, and the battery characteristics are improved. In addition, it is also advantageous in terms of cost.

In order to laminate the second porous layer, the resin B, which is the resin having a melting point of lower than 150°C or the amorphous resin, is used, and the second porous layer may contain inorganic particles to improve the heat resistance. If necessary, dispersants, thickeners, stabilizers, defoamers, leveling agents, and the like may be added.

The content of the resin B in the second porous layer is preferably 20 mass% or more and 100 mass% or less, more preferably 50 mass% or more and 100 mass% or less, and still more preferably 80 mass% or more and 100 mass% or less, based on 100 mass% of the entire second porous layer.

In the case where the content of the resin B in the porous layer is 20 mass% or more, sufficient adhesiveness with the electrode can be obtained.

In a method for preparing the coating liquid, the solvent is not particularly limited as long as it dissolves the resin B, and examples of the solvent include aprotic organic polar solvents such as N-methyl-2-pyrrolidone, N,N-dimethylacetamide, dimethylformamide, and dimethyl sulfoxide, acetone, methyl ethyl ketone, methyl isobutyl ketone, and the like. Among them, N-methyl-2-pyrrolidone is particularly preferred from the viewpoint of formation of a porous structure in the later step.

As a dispersion method and a coating method for the coating liquid, a method similar to that for the first porous layer may be used. The first porous layer and the second porous layer may be laminated separately, and it is preferable that the first porous layer and the second porous layer are laminated simultaneously using two-layer die coating because of low cost.

A thickness of the first porous layer is preferably 0.5 μm or more and 10 μm or less. The thickness is more preferably 2 μm or more and 6 μm or less. The thickness is still more preferably 3 μm or more and 5 μm or less. Here, the "thickness of the first porous layer" refers to the thickness of the porous layer in the case where the porous film includes a porous layer provided on one surface of the porous substrate, and refers to the total thickness of two first porous layers in the case where the porous film includes first porous layers on both surfaces of the porous substrate. In the case where the thickness of the first porous layer is 0.5 μm or more, sufficient heat rupture resistance can be obtained. In the case where the thickness is 10 μm or less, a sufficient porous structure can be obtained and the battery characteristics can be prevented from decreasing. In addition, it is also advantageous in terms of cost. In the case where the porous film includes porous layers on both surfaces of the porous substrate, the total thickness of the two first porous layers is preferably 0.5 μm or more and 10 μm or less.

A thickness of the second porous layer is preferably 0.02 μm or more and 5 μm or less. The thickness is more preferably 0.1 μm or more and 4 μm or less. The thickness is still more preferably 0.2 μm or more and 2 μm or less. Here, the "thickness of the second porous layer" refers to the thickness of the porous layer in the case where the porous film includes a second porous layer provided on one surface of the porous substrate, and refers to the thickness of two second porous layers in the case where the porous film includes second porous layers on both surfaces of the porous substrate. In the case where the thickness of the second porous layer is 0.02 μm or more, sufficient adhesiveness with the electrode can be obtained. In the case where the thickness is 5 μm or more, a sufficient porous structure can be obtained and the battery characteristics may be prevented from decreasing. In addition, it is also advantageous in terms of cost. In the case where the porous film includes second porous layers on both surfaces of the porous substrate, the total thickness of the two second porous layers is preferably 0.02 μm or more and 5 μm or less.

As shown in FIG. 1, the thickness of the first porous layer refers to an average value of vertical distances (HA) (reference numeral 7) from a boundary surface A (reference numeral 4) between a porous substrate (reference numeral 1) and a first porous layer (reference numeral 2), which is regarded as a base, to any point of a boundary surface B (reference numeral 5) between the first porous layer and a second porous layer (reference numeral 3), and the thickness of the second porous layer refers to a value obtained by subtracting HA from a vertical distance (HB) (reference numeral 8) from the boundary surface A between the porous substrate and the first porous layer, which is regarded as a base, to any point of an outermost surface (reference numeral 6) of the second porous layer.

The boundary surface A between the porous substrate and the first porous layer, and the boundary surface B between the first porous layer and the second porous layer refer to a surface in which parts adjacent in a thickness direction have discontinuous element composition, shape of inclusions, and physical characteristics. Specifically, when cross-sections are observed in the thickness direction by various composition/elemental analyzers (IR, XPS, XRF, EDX, SIMS, etc.), electron microscopes (transmission type, scanning type) or optical microscopes, the discontinuous surfaces can be regarded as the boundary surface A between the porous substrate and the first porous layer, and as the boundary surface B between the first porous layer and the second porous layer.

In the porous layer in the present invention, a mixed-layer thickness (HC) (reference numeral 9) of the first porous layer and the second porous layer is 0.1 μm or more and 1.0 μm or less. As shown in FIG. 2, the mixed-layer thickness (HC) refers to a thickness obtained by subtracting the minimum value (reference numeral 11) of vertical distances from the boundary surface A between the porous substrate (reference numeral 1) and the first porous layer (reference numeral 2), which is regarded as a base, to the boundary surface B between the first porous layer and the second porous layer, from the maximum value (reference numeral 10) of vertical distances from the boundary surface A between the porous substrate (reference numeral 1) and the first porous layer (reference numeral 2), which is regarded as a base, to the boundary surface B between the first porous layer and the second porous layer. The mixed-layer thickness is more preferably 0.1 μm or more and 0.7 μm or less, and still more preferably 0.2 μm or more and 0.5 μm or less. In the case where the mixed-layer thickness (HC) is less than 0.1 μm, an adhesion between the first porous layer and the second porous layer is not sufficient. Therefore, the adhesiveness between the second porous layer and the electrode may not be sufficient. In the case where the mixed-layer thickness (HC) is more than 1.0 μm, the variation in the value of HB becomes large, leading to a decrease in the battery characteristics.

A rising value of air permeability due to lamination of porous layers is preferably 250 secs/100 cc or less. The rising value is more preferably 200 secs/100 cc or less. Here, the rising value of air permeability due to lamination of porous layers refers to a value obtained by subtracting the air permeability of the porous substrate alone from air permeability of the porous film having a porous layer, and represents a rising value of air permeability due to lamination

of the porous layers. In the case where the rising value of air permeability due to lamination of porous layers is more than 250 secs/100 cc, the battery characteristics may deteriorate.

[Porous substrate]

The porous substrate in the present invention refers to a substrate having pores inside. In the present invention, examples of the porous substrate include a porous membrane having pores inside, a nonwoven fabric, or a porous membrane sheet made of fibrous materials, and the like. As a material constituting the porous substrate, a resin that is electrically insulating, electrically stable, and stable in electrolytic solutions preferably constitutes the porous substrate. In addition, a resin to be used is preferably a thermoplastic resin having a melting point of 200°C or lower, from the viewpoint of imparting shutdown functions. The shutdown function here refers to a function that when a lithium ion battery generates heat abnormally, the porous structure is closed due to melting by the heat and the movement of ions is stopped, thereby stopping power generation.

Examples of the thermoplastic resin include polyolefin-based resins, and the porous substrate is preferably a polyolefin-based porous substrate. In addition, the polyolefin-based porous substrate is more preferably a polyolefin-based porous substrate having a melting point of 200°C or lower. Specific examples of the polyolefin-based resins include polyethylene, polypropylene, a copolymer thereof, and a mixture combining these compounds. For example, a single-layer porous substrate containing 90 mass% or more of polyethylene, a multilayer porous substrate composed of polyethylene and polypropylene, and the like may be exemplified.

Examples of methods for producing the porous substrate include a porosification method in which a polyolefin-based resin is made into a sheet and then was stretched to be porous, and a porosification method in which a polyolefin-based resin is dissolved in a solvent such as liquid paraffin, and is made into a sheet, followed by extracting the solvent.

The thickness of the porous substrate is preferably 3 μm or more and 50 μm or less, and more preferably 5 μm or more and 30 μm or less. In the case where the thickness of the porous substrate is more than 50 μm, internal resistance of porous substrate may increase. In addition, in the case where the thickness of the porous substrate is less than 3 μm, production may become difficult and sufficient mechanical characteristics may not be obtained.

The air permeability of the porous substrate is preferably 50 secs/100 cc or more and 1,000 secs/100 cc or less. The air permeability is more preferably 50 secs/100 cc or more and 500 secs/100 cc or less. In the case where the air permeability is more than 1,000 secs/100 cc, sufficient ion mobility may not be obtained, and the battery characteristics may deteriorate. In the case where the air permeability is less than 50 secs/100 cc, sufficient mechanical characteristics may not be obtained.

[Porous film]

The porous film in the present invention is a porous film including the porous layer provided on at least one surface of the porous substrate. The porous layer is preferably sufficiently porous to have ion permeability, and air permeability of the porous film is preferably 50 secs/100 cc or more and 1,000 secs/100 cc or less. The air permeability is more preferably 50 secs/100 cc or more and 500 secs/100 cc or less. The air permeability is still more preferably 50 secs/100 cc or more and 300 secs/100 cc or less. In the case where the air permeability is more than 1,000 secs/100 cc, sufficient ion mobility may not be obtained, and the battery characteristics may deteriorate. In the case where the air permeability is less than 50 secs/100 cc, sufficient mechanical characteristics may not be obtained.

[Secondary battery]

The porous film in the present invention may be preferably used for a separator for a secondary battery such as a lithium ion battery. The lithium ion battery has a structure in which a secondary battery separator and electrolytes are interposed between a positive electrode in which a positive electrode active material is laminated on a positive electrode current collector, and a negative electrode in which a negative electrode active material is laminated on a negative electrode current collector.

The positive electrode is an electrode in which a positive electrode material composed of active materials, binder resins, and conductive assistants is laminated on a current collector, and examples of the active materials include layered lithium-containing transition metal oxides such as $LiCoO_2$, $LiNiO_2$, and $Li(NiCoMn)O_2$, spinel-type manganese oxides such as $LiMn2O_4$, iron-based compounds such as $LiFePO_4$, and the like. As the binder resin, a resin having high oxidation resistance may be used. Specific examples thereof include fluororesins, acrylic resins, styrene-butadiene resins, and the like. As the conductive assistant, a carbon material such as carbon black and graphite may be used. As the current collector, a metal foil is preferred, and aluminum is particularly preferably used.

The negative electrode is an electrode obtained by laminating a negative electrode material composed of active materials and binder resins on a current collector, and examples of the active materials include carbon materials such

as artificial graphite, natural graphite, hard carbon, and soft carbon, lithium alloy materials with tin, silicon or the like, metal materials such as Li, lithium titanate ($Li_4Ti_5O_{12}$), and the like. As the binder resin, fluororesins, acrylic resins, styrene-butadiene resins, and the like may be used. As the current collector, a metal foil is preferred, and a copper foil is often used particularly.

The electrolytic solution provides a field for moving ions between a positive electrode and a negative electrode in a secondary battery, and is obtained by dissolving the electrolyte in an organic solvent. Examples of the electrolyte include LiPF6, LiBF4, $LiClO_4$, and the like, and LiPF6 is preferably used from the viewpoint of solubility in organic solvents and ionic conductivity. Examples of the organic solvent include ethylene carbonate, propylene carbonate, fluoroethylene carbonate, dimethyl carbonate, diethyl carbonate, ethyl methyl carbonate, gamma-butyrolactone, sulfolane, and the like, and two or more kinds of these organic solvents may be mixed and used.

In a method for producing the secondary battery, first, the active materials and conductive assistants are dispersed in a binder solution to prepare a coating liquid for an electrode, the coating liquid is applied to a current collector, and the solvent is dried, thereby obtaining each of a positive electrode and a negative electrode. The thickness of the coating film after drying is preferably 50 μm or more and 500 μm or less. A secondary battery separator is disposed between the obtained positive electrode and negative electrode so as to come in contact with an active material layer of each electrode, and they are sealed in an exterior material such as an aluminum laminate film, followed by injection of an electrolytic solution, and then a negative electrode lead or a safety valve are installed and the exterior material is sealed. The secondary battery obtained in this way has high heat rupture resistance and excellent battery characteristics, and further, production at low cost is enabled.

## Examples

Hereinafter, the present invention is described in detail with reference to Examples, but the present invention is not limited thereto. The measurement method used in the present example is described below.

[Measurement method]

(1) Thickness of first porous layer and thickness of second porous layer

A porous film was frozen with liquid nitrogen and was irradiated with argon beams from an upper portion thereof to prepare a cross section (Cryo-BIB method), and ion coating was performed on the cross section by using an ion coater, thereby preparing a sample for measurement. The cross sections of the obtained samples were observed at a largest magnification at which the boundary surface A and the outermost surface can be observed simultaneously, by using a field emission scanning electron microscope (FE-SEM) S4800 manufactured by Hitachi High-Technologies Corporation under an acceleration voltage of 1.5 kV, and image data was obtained. In the case where the boundary surface A between the porous substrate and the first porous layer and the boundary surface B between the first porous layer and the second porous layer are easily determined from the image data, the boundary surfaces are drawn based on the image data. In the case where the determination is difficult, the boundary surface A and the boundary surface B are drawn by elemental analysis of EDX, or the like.

When obtained image data was divided into 10 equal parts in a lateral direction by drawing 10 perpendicular lines for the porous substrate with an equal interval, vertical distances (HA) from intersection points of the 10 perpendicular lines and the boundary surface B between the first porous layer and the second porous layer to the boundary surface A between the porous substrate and the first porous layer were measured, and an average value thereof was defined as the thickness of the first porous layer. In the case where the first porous layer was laminated on both surfaces, HA was measured for both surfaces, and the total value was defined as the thickness of the first porous layer. In addition, the vertical distances (HB) from intersection points of the perpendicular lines and the outermost surface of the second porous layer to the boundary surface A between the porous substrate and the first porous layer were measured, a value obtained by subtracting the thickness of the first porous layer calculated by the above method from an average value thereof was calculated, and the value was defined as the thickness of the second porous layer. In the case where the second porous layer was laminated on both surfaces, HB was measured for both surfaces, and the total value was defined as the thickness of the second porous layer. Regarding the size of the image data, the size of the image was not reduced by trimming or the like, and a size as photographed was used.

(2) Mixed-layer thickness (HC)

The boundary surfaces obtained in (1) were used to calculate values of 10 images, which were obtained by subtracting the minimum value (reference numeral 11) of the vertical distances from the boundary surface A between the porous substrate and the first porous layer, which was regarded as a base, to the boundary surface B between the

first porous layer and the second porous layer from the maximum value (reference numeral 10) thereof, as shown in FIG. 2, an average value of the values was calculated and was defined as a mixed-layer thickness. In the case where the first porous layer and the second porous layer were laminated on both surfaces, HC was measured for both surfaces, and the average value was defined as the mixed-layer thickness.

(3) Intrinsic viscosity (η)

An aromatic polyamide as the resin A was dissolved at a concentration of 0.5 g/dl in N-methylpyrrolidone (NMP) to which 2.5 mass% of lithium bromide (LiBr) was added, and flow time thereof was measured at 30°C by using an Ubbelohde viscometer. The flow time of NMP as a blank solution in which the polymer had not been dissolved was also measured in the same manner, and the intrinsic viscosity (η) (dl/g) was calculated using the following equation.

$$\text{Intrinsic viscosity } (\eta)\ (\text{dl/g}) = [\ln (t/t_0)]/0.5$$

$t_0$: Flow time of blank solution (sec)
t: Flow time of sample (sec)

(4) Thermal film rupture temperature

A porous film having a size of 50 mm × 50 mm was cut out to be a sample, the sample was interposed between two stainless steel plates each having a through hole of 12 mm at the center thereof, and further, the two stainless steel plates were interposed between two heating block plates each having a through hole of 12 mm at the center thereof from both surfaces. A ball having a diameter of 9.5 mm made of tungsten was placed in the through hole, the temperature of the heating blocks was raised at 5°C/min and the temperature at which the ball fell was measured. Five samples each having a size of 50 mm × 50 mm were prepared, and the average value of the performed measurements was determined as the thermal film rupture temperature. The temperature being lower than 160°C was evaluated as "D", the temperature being 160°C or higher and lower than 200°C was evaluated as "C", the temperature being 200°C or higher and lower than 250°C was evaluated as "B", and the temperature being 250°C or higher was evaluated as "A".

(5) Melting point

In the differential scanning calorimetry (DSC) according to the regulation of "JIS K7121: 2012 Method for measuring transition temperature of plastic", 6 to 7 mg of resin A and 6 to 7 mg of resin B were respectively placed in different measurement pans in a DSC (Differential Scanning Calorimeter) manufactured by PerkinElmer, thereby preparing samples for measurement, and the measurement was performed according to the following conditions. After temperature was raised and lowered once, temperature of a peak top of an endothermic peak in a second temperature rise was defined as the melting point.

Rate of temperature rise and fall: ±10°C/min
Range of measurement temperature: -20°C to 300°C.

(6) Adhesiveness with electrode

A porous film and a positive electrode of 15 mm × 100 mm, in which an active material was $LiCoO_2$, a binder was a vinylidene fluoride resin, and a conductive assistant was carbon black, were disposed such that the active material contacts the porous layer, hot-pressed at 0.5 MPa, 80°C, and 0.4 m/min by a hot roll press machine, peeled off the porous film manually using tweezers, and the adhesive strength was evaluated based on the following four grades. Similarly, adhesive strength between a porous film and a negative electrode in which an active material was graphite, a binder was a vinylidene fluoride resin, and a conductive assistant was carbon black was also measured, each of the positive electrode and the negative electrode was evaluated, and the result was defined as the adhesive strength.

- Adhesive strength "A": The porous film was peeled off from the electrode with a strong force
- Adhesive strength "B": The porous film was peeled off from the electrode with a slightly strong force
- Adhesive strength "C": The porous film was peeled off from the electrode with a weak force
- Adhesive strength "D": The porous film was peeled off from the electrode with an extremely weak force

(7) Production of battery

An aluminum foil was coated with a positive electrode slurry which was obtained by dispersing 92 parts by mass of $Li(Ni_{5/10}Mn_{2/10}Co_{3/10})O_2$ as a positive electrode active material, 2.5 parts by mass of acetylene black and graphite each as the positive electrode conductive assistant, and 3 parts by mass of polyvinylidene fluoride as a positive electrode binder into N-methyl-2-pyrrolidone by using a planetary mixer, followed by performing drying and rolling, thereby producing a positive electrode sheet (coating basis weight: 9.5 $mg/cm^2$).

This positive electrode sheet was cut out to be 40 mm × 40 mm. At this time, a current-collecting tab-attaching portion having no active material layer was cut out so as to have a size of 5 mm × 5 mm outside an active material surface. An aluminum tab having a width of 5 mm and a thickness of 0.1 mm was ultrasonically welded to the tab-attaching portion.

A copper foil was coated with a negative electrode slurry which was obtained by dispersing 98 parts by mass of natural graphite as a negative electrode active material, 1 part by mass of carboxymethylcellulose as a thickener, 1 part by mass of styrene-butadiene copolymer as a negative electrode binder into water by using a planetary mixer, followed by performing drying and rolling, thereby producing a negative electrode sheet (coating basis weight: 5.5 $mg/cm^2$).

This negative electrode sheet was cut out to be 45 mm × 45 mm. At this time, a current-collecting tab-attaching portion having no active material layer was cut out so as to have a size of 5 mm × 5 mm outside an active material surface. A copper tab having the same size as the positive electrode tab was ultrasonically welded to the tab-attaching portion.

Next, the porous film was cut out to be 55 mm × 55 mm, the positive electrode and the negative electrode are stacked on both surfaces of the porous film such that the porous film was interposed between the active material layers, and all the positive electrode coating portion was disposed opposite to the negative electrode coating portion, so as to obtain an electrode group. The positive electrode, negative electrode and porous film were interposed between one sheet of aluminum laminated film of 90 mm × 200 mm, long sides of the aluminum laminated film were folded, and the two long sides of the aluminum laminated film were heat-sealed to form a bag.

An electrolytic solution which was prepared by dissolving LiPF6, as a solute, in a mixed solvent containing ethylene carbonate and diethyl carbonate (ethylene carbonate: diethyl =1 : 1 (volume ratio)) to reach a concentration of 1 mol/liter, was used. Into the bag-shaped aluminum laminated film, 1.5 g of electrolytic solutions were injected, and the short side portion of the aluminum laminated film was thermally fused while impregnating under reduced pressure to obtain a laminated battery.

(8) Discharge load characteristics

Tests were performed on the discharge load characteristics in accordance with the following procedure, and the discharge load characteristics were evaluated based on a discharge capacity retention ratio.

The above laminated battery was measured in terms of discharge capacity in the case of discharging at 0.5 C at 25°C and discharge capacity in the case of discharging at 10 C at 25°C, and a discharge capacity retention ratio was calculated as follows: "(discharge capacity at 10 C)/(discharge capacity at 0.5 C) × 100". Here, a charge condition was constant current charge at 0.5 C and 4.3 V, and a discharge condition was constant current discharge at 2.7 V. Five laminated batteries were produced, and an average value of three measurement results obtained by removing results of the maximum discharge capacity retention ratio and the minimum discharge capacity retention ratio from the five measurement results, was determined as the capacity retention ratio. The case where a discharge capacity retention ratio was less than 55% was evaluated as "D", the case where a discharge capacity retention ratio was 55% or more and less than 65% was evaluated as "B", and the case where a discharge capacity retention ratio was 65% or more was evaluated as "A".

(9) Charge and discharge cycle characteristics

Tests were performed on the charge and discharge cycle characteristics in accordance with the following procedure, and the charge and discharge cycle characteristics were evaluated based on a discharge capacity retention ratio.

<1st to 300th cycles>

One charge and one discharge were regarded as one cycle, and charge and discharge was repeated 300 times at 25°C under a charge condition of constant current charge at 2 C and 4.3 V and a discharge condition of constant current discharge at 2 C and 2.7 V.

<Calculation of discharge capacity retention ratio>

The discharge capacity retention ratio was calculated as follows: (discharge capacity at 300th cycle)/(discharge capacity at 1st cycle) × 100. Five laminated batteries were produced, and an average value of three measurement results obtained by removing results of the maximum discharge capacity retention ratio and the minimum discharge capacity retention ratio from the five measurement results, was determined as the capacity retention ratio. The case where a discharge capacity retention ratio was less than 60% was evaluated as "D", the case where a discharge capacity retention ratio was 60% or more and less than 70% was evaluated as "B", and the case where a discharge capacity retention ratio was 70% or more was evaluated as "A".

(Example 1)

First, a coating liquid A for laminating the first porous layer was prepared. In dehydrated N-methyl-2-pyrrolidone, 2-chloro-1,4-phenylenediamine equivalent to 85 mol% based on the total amount of diamine and 4,4'-diaminodiphenyl ether equivalent to 15 mol% were dissolved. Into the obtained solution, 2-chloroterephthaloyl chloride equivalent to 98.5 mol% to the total amount of diamine was added as acid dichloride, followed by stirring, thereby polymerizing the aromatic polyamides. The obtained polymerization solution was neutralized with lithium carbonate in an amount of 97 mol% based on the total amount of the acid dichloride, and further was neutralized with 15 mol% of diethanolamine and 25 mol% of triethanolamine, and thus an aromatic polyamide solution having a concentration of the aromatic polyamide being 10 mass% was obtained. The intrinsic viscosity ($\eta$) of the aromatic polyamide was 3.0 dl/g, and the aromatic polyamide was a resin having no melting point within -20°C to 300°C and showing no baseline shift in differential scanning calorimetry (DSC), and satisfied requirements of the resin A.

N-methyl-2-pyrrolidone was added to the obtained aromatic polyamide solution, and further, alumina particles (average particle diameter: 0.4 μm) were added such that the concentration of the aromatic polyamide was 10 mass% in 100 mass% of the entire first porous layer. The mixed solution was preliminarily dispersed by a stirrer, and then dispersed using a bead mill to obtain a coating liquid A (concentration of solid contents of the coating liquid A: 20 mass%).

Subsequently, a coating liquid B for laminating the second porous layer was prepared. Fluororesin (copolymer of vinylidene fluoride and hexafluoropropylene, melting point: 130°C) was used as the resin B such that the resin B was 100 mass% in 100 mass% of the entire second porous layer. Next, N-methyl-2-pyrrolidone was added such that the concentration of solid contents of the coating liquid B was 10 mass%, and the mixed solution was dispersed with a stirrer to obtain the coating liquid B.

The obtained coating liquids A and B were applied to both surfaces of a polyethylene porous substrate (thickness: 5 μm, air permeability: 120 secs/100 cc) by two-layer die coating, followed by being immersed in a water tank and subjected to drying until the solvent contained therein was volatilized, thereby forming a first porous layer and a second porous layer, and thus the porous film in the present invention was obtained. Table 1 shows the measurement results of the obtained porous film in terms of the thickness of the first porous layer, the thickness of the second porous layer, the mixed-layer thickness, thermal film rupture temperature, adhesiveness with an electrode, discharge load characteristics, and charge and discharge cycle characteristics.

(Example 2)

A porous film in the present invention was obtained in the same manner as Example 1 except that the concentration of solid contents of the coating liquid A was 30 mass% by adjusting the addition amount of N-methyl-2-pyrrolidone, fluororesin (a copolymer of vinylidene fluoride and hexafluoropropylene, melting point: 120°C) was used as the resin B, and the thicknesses of the first porous layer and the second porous layer were the thicknesses described in Table 1.

(Example 3)

A porous film in the present invention was obtained in the same manner as Example 1 except that the intrinsic viscosity ($\eta$) of aromatic polyamide was 4.3 dl/g (as the acid dichloride, 2-chloroterephthaloyl chloride corresponding to 99 mol% of the total amount of diamine was added), fluororesin (a copolymer of vinylidene fluoride and hexafluoropropylene, melting point: 120°C) was used as the resin B, and the thicknesses of the first porous layer and the second porous layer were the thicknesses described in Table 1. The aromatic polyamide having intrinsic viscosity ($\eta$) of 4.3 dl/g was a resin having no melting point within -20°C to 300°C and showing no baseline shift in differential scanning calorimetry (DSC), and satisfied requirements of the resin A.

(Example 4)

A porous film in the present invention was obtained in the same manner as Example 1 except that the intrinsic viscosity (η) of aromatic polyamide was 4.3 dl/g (as the acid dichloride, 2-chloroterephthaloyl chloride corresponding to 99 mol% of the total amount of diamine was added), the concentration of solid contents of the coating liquid A was 15 mass% by adjusting the addition amount of N-methyl-2-pyrrolidone, and the thicknesses of the first porous layer and the second porous layer were the thicknesses described in Table 1. The aromatic polyamide having intrinsic viscosity (η) of 4.3 dl/g was a resin having no melting point within -20°C to 300°C and showing no baseline shift in differential scanning calorimetry (DSC), and satisfied requirements of the resin A.

(Example 5)

A porous film in the present invention was obtained in the same manner as Example 1 except that the intrinsic viscosity (η) of aromatic polyamide was 4.3 dl/g (as the acid dichloride, 2-chloroterephthaloyl chloride corresponding to 99 mol% of the total amount of diamine was added), and the thicknesses of the first porous layer and the second porous layer were the thicknesses described in Table 1. The aromatic polyamide having intrinsic viscosity (η) of 4.3 dl/g was a resin having no melting point within -20°C to 300°C and showing no baseline shift in differential scanning calorimetry (DSC), and satisfied requirements of the resin A.

(Example 6)

A porous film in the present invention was obtained in the same manner as Example 1 except that the concentration of solid contents of the coating liquid A was 5 mass% by adjusting the addition amount of N-methyl-2-pyrrolidone, and the thicknesses of the first porous layer and the second porous layer were the thicknesses described in Table 1.

(Example 7)

A porous film in the present invention was obtained in the same manner as Example 1 except that the intrinsic viscosity (η) of aromatic polyamide was 2.5 dl/g (as the acid dichloride, 2-chloroterephthaloyl chloride corresponding to 98 mol% of the total amount of diamine was added), and the thicknesses of the first porous layer and the second porous layer were the thicknesses described in Table 1. The aromatic polyamide having intrinsic viscosity (η) of 2.5 dl/g was a resin having no melting point within -20°C to 300°C and showing no baseline shift in differential scanning calorimetry (DSC), and satisfied requirements of the resin A.

(Example 8)

A porous film in the present invention was obtained in the same manner as Example 1 except that fluororesin (a copolymer of vinylidene fluoride and hexafluoropropylene, melting point: 120°C) was used as the resin B, and the thicknesses of the first porous layer and the second porous layer were the thicknesses described in Table 1.

(Example 9)

A porous film in the present invention was obtained in the same manner as Example 1 except that acrylic resin (monomer: ethyl acrylate 30 parts, n-butyl acrylate 30 parts, methacrylic acid 30 parts, methyl methacrylate 10 parts, melting point: 80°C) was used as the resin B, and the thicknesses of the first porous layer and the second porous layer were the thicknesses described in Table 1.

(Example 10)

A porous film in the present invention was obtained in the same manner as Example 1 except that the coating liquid A was applied to both surfaces by die coating to form a first porous layer, then the coating liquid B in which acrylic resin (monomer: ethyl acrylate 30 parts, n-butyl acrylate 30 parts, methacrylic acid 30 parts, methyl methacrylate 10 parts, melting point: 80°C) was used as the resin B was applied to first porous layers on both surfaces by gravure coating to form a second porous layer, and the thicknesses of the first porous layer and the second porous layer were the thicknesses described in Table 1.

(Comparative Example 1)

A porous film was obtained in the same manner as Example 1 except that the fluororesin (a copolymer of vinylidene fluoride and hexafluoropropylene, melting point: 165°C) was used instead of the resin B in Example 1, and the thicknesses of the first porous layer and the second porous layer were the thicknesses described in Table 1.

(Comparative Example 2)

A porous film was obtained in the same manner as Example 1 except that fluororesin (a copolymer of vinylidene fluoride and hexafluoropropylene, melting point: 130°C) was used instead of the resin A in Example 1, fluororesin (a copolymer of vinylidene fluoride and hexafluoropropylene, melting point: 120°C) was used instead of the resin B, and the thicknesses of the first porous layer and the second porous layer were the thicknesses described in Table 1.

(Comparative Example 3)

A porous film was obtained in the same manner as Example 1 except that the coating liquid A was prepared such that the content of aromatic polyamide was 15 mass% in 100 mass% of the entire first porous layer, and further, the concentration of solid contents of the coating liquid was 40 mass% by adjusting the addition amount of N-methyl-2-pyrrolidone, the coating liquid A was applied to both surfaces by die coating to form a first porous layer, then the coating liquid B was applied to the first porous layers on both surfaces by gravure coating to form a second porous layer, and the thicknesses of the first porous layer and the second porous layer were the thicknesses described in Table 1.

Table 1

| | Intrinsic viscosity (η) of resin A | Content of resin A in entire first porous layer (mass%) | Concentration of solid contents of coating liquid A (mass%) | Resin B | Melting point of resin B (°C) | Thickness of first porous layer (μm) | Thickness of second porous layer (μm) |
|---|---|---|---|---|---|---|---|
| Example 1 | 3.0 | 10 | 20 | Fluororesin | 130 | 6.0 | 2.0 |
| Example 2 | 3.0 | 10 | 30 | Fluororesin | 120 | 4.0 | 2.0 |
| Example 3 | 4.3 | 10 | 20 | Fluororesin | 120 | 3.0 | 2.0 |
| Example 4 | 4.3 | 10 | 15 | Fluororesin | 130 | 4.0 | 0.7 |
| Example 5 | 4.3 | 10 | 20 | Fluororesin | 130 | 1.5 | 1.0 |
| Example 6 | 3.0 | 10 | 5 | Fluororesin | 130 | 4.0 | 2.0 |
| Example 7 | 2.5 | 10 | 20 | Fluororesin | 130 | 4.0 | 2.0 |
| Example 8 | 3.0 | 10 | 20 | Fluororesin | 120 | 4.0 | 0.1 |
| Example 9 | 3.0 | 10 | 20 | Acrylic resin | 80 | 4.0 | 1.0 |
| Example 10 | 3.0 | 10 | 20 | Acrylic resin | 80 | 4.0 | 0.4 |
| Comparative Example 1 | 3.0 | 10 | 20 | Fluororesin | 165 | 4.0 | 0.7 |
| Comparative Example 2 | 3.0 | 0 | 20 | Fluororesin | 120 | 4.0 | 2.0 |
| Comparative Example 3 | 3.0 | 15 | 40 | Fluororesin | 130 | 4.0 | 0.5 |

Table 1 continued

| | Mixed-layer thickness (μm) | Thermal film rupture temperature | Adhesiveness with electrode | Discharge load characteristics | Charge and discharge cycle characteristics |
|---|---|---|---|---|---|
| Example 1 | 0.2 | A | B | B | B |
| Example 2 | 0.6 | B | A | A | A |
| Example 3 | 0.5 | A | A | A | A |
| Example 4 | 0.2 | A | B | A | A |
| Example 5 | 0.5 | B | B | A | A |
| Example 6 | 0.1 | B | C | A | A |
| Example 7 | 0.5 | C | B | A | A |
| Example 8 | 0.6 | B | C | A | A |
| Example 9 | 0.3 | B | A | A | A |
| Example 10 | 0.3 | B | A | A | A |
| Comparative Example 1 | 0.2 | B | D | A | A |
| Comparative Example 2 | 0.5 | D | A | A | A |
| Comparative Example 3 | 0.05 | B | D | A | A |

As shown in Table 1, all of Examples 1 to 10 are a porous film including a porous substrate and a porous layer provided on at least one surface of the porous substrate, in which the porous layer includes a first porous layer containing a resin A (resin A: a resin having a melting point of 150°C or higher, or a resin having no substantial melting point), and a second porous layer containing a resin B (resin B: a resin having a melting point of lower than 150°C or an amorphous resin) on the first porous layer, and a mixed-layer thickness (HC) of the first porous layer and the second porous layer is 0.1 μm or more and 1.0 μm or less. Therefore, sufficient heat rupture resistance and adhesiveness with an electrode, and good battery characteristics can be obtained.

In contrast, in Comparative Example 1, the melting point of the resin used was high, and thus sufficient adhesiveness with an electrode cannot be obtained. In Comparative Example 2, the melting point of the resin A was low, and sufficient heat rupture resistance cannot be obtained. In Comparative Example 3, the mixed-layer thickness was small, and thus sufficient adhesiveness with an electrode cannot be obtained.

Industrial applicability

The present invention provides a porous film having high heat rupture resistance, high adhesiveness with an electrode, and excellent battery characteristics.

Although the present invention are described in detail with reference to the specific embodiment, it will be apparent to those skilled in the art that various changes and modifications can be made without departing from the spirit and scope of the present invention.

This application is based on Japanese Patent Application No. 2017-227528 filed on November 28, 2017, the content of which are incorporated herein by reference.

Reference Signs List

1: Porous substrate
2: First porous layer
3: Second porous layer
4: Boundary surface A between porous substrate and first porous layer
5: Boundary surface B between first porous layer and second porous layer
6: Outermost surface
7: Vertical distance (HA) to boundary surface B between porous substrate and first porous layer
8: Vertical distance (HB) to outermost surface of second porous layer and porous substrate
9: Mixed-layer thickness (HC) of first porous layer and second porous layer
10: Maximum value of vertical distance to boundary surface B between first porous layer and second porous layer
11: Minimum value of vertical distance to boundary surface B between first porous layer and second porous layer

## Claims

1. A porous film comprising:

   a porous substrate; and
   a porous layer provided on at least one surface of the porous substrate,
   wherein the porous layer includes a first porous layer containing the following resin A, and a second porous layer containing the following resin B on the first porous layer, and a mixed-layer thickness (HC) of the first porous layer and the second porous layer is 0.1 μm or more and 1.0 μm or less:

   resin A: a resin having a melting point of 150°C or higher, or a resin having no substantial melting point; and
   resin B: a resin having a melting point of lower than 150°C, or an amorphous resin.

2. The porous film according to claim 1, wherein a thickness of the first porous layer is 0.5 μm or more and 10 μm or less.

3. The porous film according to claim 1 or 2, wherein a thickness of the second porous layer is 0.02 μm or more and 5 μm or less.

4. The porous film according to any one of claims 1 to 3, wherein the resin A is at least one kind of resin selected from the group consisting of polyamides, polyamide-imides, and polyimides.

5. The porous film according to claim 4, wherein the resin A contains an aromatic polyamide including a structure represented by the following formula (1):

   $$-NH-Ar^1-NH-CO-Ar^2-CO- \qquad (1)$$

   wherein $Ar^1$ and $Ar^2$ each represent an aromatic group.

6. The porous film according to claim 5, wherein an intrinsic viscosity (η) of the aromatic polyamide is 3.0 dl/g or more and 8.0 dl/g or less.

7. The porous film according to any one of claims 1 to 6, wherein the resin B is any one of fluororesins, acrylic resins, and olefin resins.

8. The porous film according to any one of claims 1 to 7, wherein the first porous layer contains an inorganic particle having an average particle diameter of 0.05 μm or more and 5 μm or less.

9. A secondary battery separator comprising the porous film according to any one of claims 1 to 8.

10. A secondary battery comprising the secondary battery separator according to claim 9.

FIG. 1

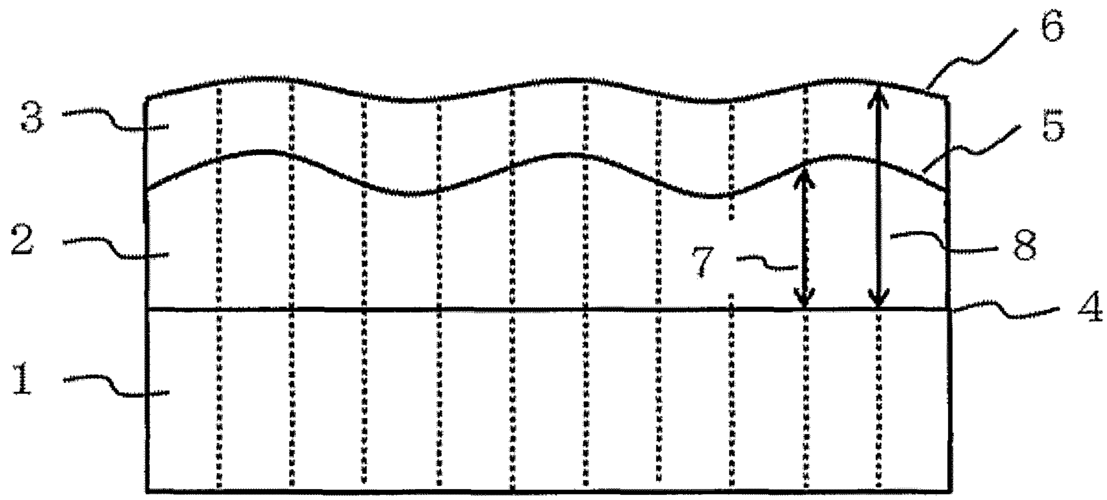


FIG. 2

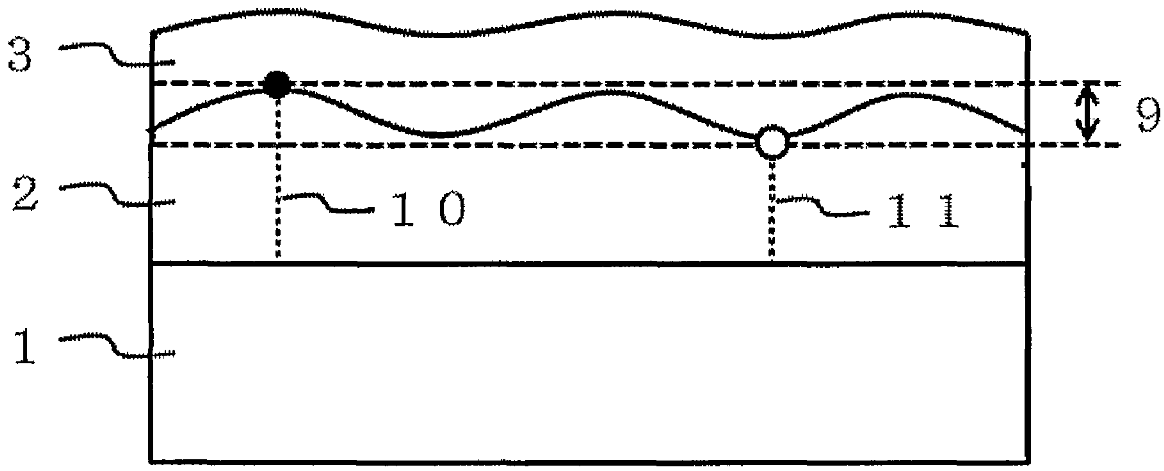

**INTERNATIONAL SEARCH REPORT**

International application No.
PCT/JP2018/042830

A. CLASSIFICATION OF SUBJECT MATTER
Int.Cl. H01M2/16(2006.01)i, B32B5/24(2006.01)i

According to International Patent Classification (IPC) or to both national classification and IPC

B. FIELDS SEARCHED

Minimum documentation searched (classification system followed by classification symbols)
Int.Cl. H01M2/16, B32B5/24

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2017/047576 A1 (HITACHI MAXELL, LTD.) 23 March 2017, claims, examples, etc. (Family: none) | 1-10 |
| A | JP 2010-214966 A (KANEKA CORP.) 30 September 2010, claims, examples, etc. (Family: none) | 1-10 |
| A | JP 2014-149936 A (NIPPON ZEON CO., LTD.) 21 August 2014, claims, examples, etc. (Family: none) | 1-10 |
| A | JP 2013-191550 A (HITACHI, LTD.) 26 September 2013, claims, examples etc. & US 2013/0244116 A1, claims, examples & WO 2013/136426 A1 & KR 10-2013-0105479 A & CN 103311550 A | 1-10 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 February 2019 (12.02.2019) | 19 February 2019 (19.02.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5183435 B
- JP 5286817 B
- JP 2013020769 A
- JP 2017227528 A